# EUROPÄISCHE PATENTSCHRIFT

(11) **EP 0 963 110 B1**
(45) Veröffentlichungstag und Bekanntmachung des Hinweises auf die Patenterteilung: **09.11.2005**
(21) Anmeldenummer: 99109693.4
(22) Anmeldetag: 17.05.1999
(51) Int. Cl.: H04N 5/455

(54) **Frequenzumsetzungseinrichtung für ein Fernsehsignalgemisch**
Frequency conversion arrangement for a composite television signal
Dispositif de conversion de fréquence pour un signal de télévision composite

(30) Priorität: 06.06.1998 DE 19825455
(43) Veröffentlichungstag der Anmeldung: 08.12.1999
(73) Patentinhaber: Micronas GmbH, 79108 Freiburg (DE)
(72) Erfinder: Fiesel, Hans, Dipl.-Ing., 79286 Glottertal (DE)
(74) Vertreter: Sauer, Wolfgang

(56) Entgegenhaltungen:
- EP-A- 0 065 150
- EP-A- 0 696 854
- EP-A- 0 813 345
- US-A- 5 572 264
- US-A- 5 748 262

## Beschreibung

Die Erfindung betrifft eine Frequenzumsetzungseinrichtung zur Verarbeitung von Fernsehsignalgemischen (=FBAS-Signale) im Zwischenfrequenzbereich für Fernseher, Videorekorder, PC-Karten oder Set Top Boxen, beispielsweise für den Satelliten- oder Kabelempfang, und weitere Multimediaanwendungen. Frequenzumsetzungs einrichtungen sind z. B. aus US-A-5 748 262 bekannt. Die zu verarbeitenden Fernsehsignalgemische sind dabei in der Regel verschiedenen Standards zugeordnet. Sie unterscheiden sich in den Frequenzabständen von Bild- und Farbträger sowie deren Pegel. Bei der Übertragung können sich aber auch die Abstände der einzelen Kanäle voneinender unterscheiden. Dies erfordert bei Multistandard-Geräten oder schon bei einer Quasi-Paralleltonverarbeitung unterschiedliche Oberflächenwellenfilter (=OFW) im Zwischenfrequenzbereich zur Kanaltrennung bzw. bei der Paralleltonverarbeitung zur Trennung der Video- und Toninformation in dem jeweiligen Kanal. Wenn die jeweiligen Oberflächenwellenfilter nämlich nicht exakt auf die jeweilige Fernsehnorm und den jeweiligen Übertragungsstandard ausgelegt sind und die Selektionsflanke im Bereich des Nachbarbildträgers liegt dann kann sich die relativ hohe Bildträgeramplitude des Nachbarkanals sowohl in den beiden Tonträgerkanälen des aktuellen Fernsehkanals als auch im Bildbereich als Störsignal bemerkbar machen. Wenn die störende Bildträgeramplitude groß genug ist, dann geht sie ferner auch als Störgröße in das Großsignalverhalten nachfolgender Stufen mit ein. Beispielsweise ist dann die stets vorhandene Nichtlinearität eines nachfolgenden Analog-Digitalumsetzers für die Signalverarbeitung nicht mehr vernachlässigbar. Ferner verschlechtert sich dabei auch die Auflösung des Analog-Digitalumsetzers, weil durch die Signalamplitude des Nachbarbildträgers ein wesentlicher Teil des vorhandenen Aussteuerbereiches belegt ist, wodurch für das eigentliche Nutzsignal die Anzahl der verfügbaren Quantisierungsstufen reduziert wird.

Oberflächenwellenfilter, die in der Regel nicht gemeinsam mit monolithisch integrierten Schaltungen zusammen hergestellt werden, stellen separate Bauelemente dar, die insbesondere beim Mehrnormenbetrieb den äußeren Schaltungsaufwand und die Anzahl der erforderlichen Bauelemente erhöhen.

Aufgabe der Erfindung ist es, den durch die Oberflächenwellenfilter entstehenden äußeren Aufwand, insbesondere beim Mehrnormenbetrieb, so weit wie möglich zu reduzieren.

Die Lösung dieser Aufgabe erfolgt im Wesentlichen durch die Verwendung eines Universal-Zwischenfrequenzfilters, dessen Bandbreite für alle Fernsehsignal- und Übertragungsstandards ausreichend groß ist. Dadurch kann gegebenenfalls ein Teil des störenden Nachbarbildträgers im gewünschten Fernsehkanal noch vorhanden sein. Der störende Nachbarbildträger wird anschließend durch eine geeignete Frequenzumsetzung des gesamten Universal-Zwischenfrequenzfilterausgangssignales in einen tiefen Frequenzbereich umgesetzt und dort mittels eines analogen Hochpasses entweder ganz unterdrückt oder zumindest so weit reduziert, daß er die nachfolgende Signalverarbeitung nicht mehr stören kann.

Die nochmalige Frequenzumsetzung des Zwischenfrequenzsignals erfolgt durch eine analoge Frequenzumsetzungseinrichtung, die das gesamte Fernsehsignalgemisch mittels eines Mischers in eine tiefe Frequenzlage umsetzt. Dabei wird für das lokale Umsetzungssignal eine Frequenz gewählt, die identisch mit der Frequenz des störenden Nachbarbildträgers ist oder zumindest in dessen Nähe liegt so daß nach der Frequenzumsetzung der störende Bildträger in der Nähe des Frequenzursprungs zu liegen kommt und mittels einer Hochpaßselektionsflanke einer analogen Filtereinrichtung aus dem Fernsehsignalgemisch ganz entfernt oder zumindest ausreichend abgeschwächt werden kann.

Die nochmalige Frequenzumsetzung hat ferner den Vorteil, daß die zu verarbeitenden Signalfrequenzen sehr niedrig liegen, was für eine spätere digitale Verarbeitung günstig ist. Die lokale Umsetzung des etwa bei 30 MHz liegenden Nachbarbildträgers stellt keine höhere Anforderungen an den Mischer, der mit einem quantisierten Umsetzungssignal, im einfachsten Fall mit einem Rechtecksignal betreibbar ist weil die erste entstehende Oberwelle der Mischung etwa bei 60 MHz liegt, während die Nutzsignalanteile des aktuellen Fernsehkanals nach der zweiten Frequenzumsetzung nur etwa bis 10 MHz reichen. Eine Unterdrückung dieser und höherer Oberwellen mittels eines geeigneten Tiefpaßfilters, das Teil der bereits erwähnten analogen Filtereinrichtung sein kann, ist somit leicht möglich. Somit ergeben sich Vorteile allein schon aus der nochmaligen Frequenzumsetzung auch ohne die Verwendung eines Universal-Zwischenfrequenzfilters und ohne die Forderung nach einem Mehrnormenbetrieb.

Das Umsetzungssignal kann gegenüber dem störenden Nachbarbildträger durchaus eine Frequenzablage aufweisen, diese muß jedoch ausreichend klein gegenüber der Grenzfrequenz des Hochpasses sein, damit dessen Selektionsflanke den Nachbarbildträger genügend weit in der Amplitude absenken kann. Die Erzeugung des Umsetzungssignals für den Mischer erfolgt durch einen lokalen Oszillator, der beim Mehrnormenbetrieb einen von einer Steuereinrichtung abhängigen frequenzgesteuerter Oszillator (=VCO oder DCO) enthält. Zweckmäßigerweise ist dabei die Frequenz mittels einer Phasenverriegelungsschleife (=PLL) auf den vorgegebenen Wert eingestellt. Ob der Oszillator dabei als Ringoszillator, als digital gesteuerter Oszillator, als RC-Oszillator oder als Sägezahnoszillator mittels einer Integrierstufe ausgebildet ist, ist von der geforderten Genauigkeit und der zur Verfügung stehenden Schaltungstechnologie abhängig. Findet die weitere Verarbeitung nach der analogen Filtereinrichtung digital statt, dann ist in der Regel auch ein quarzgenauer Systemtakt vorhanden, der dann als Frequenzreferenz für die PLL dient.

Die Erfindung und vorteilhafte Weiterbildungen werden nun anhand der Figuren der Zeichnung näher erläutert:
Fig. 1 zeigt als Schaltungsblock ein vorteilhaftes Ausführungsbeispiel für die Frequenzumsetzungseinrichtung nach der Erfindung, die insbesondere für den Mehrnormenbetrieb geeignet ist,
Fig. 2 zeigt in der Frequenzdarstellung ein typisches Fernsehsignalgemisch in der Zwischenfrequenzlage und
Fig. 3 zeigt in der Frequenzdarstellung das Fernsehsignalgemisch von Fig. 2 in der tiefen Frequenzlage nach der zweiten Frequenzumsetzung.

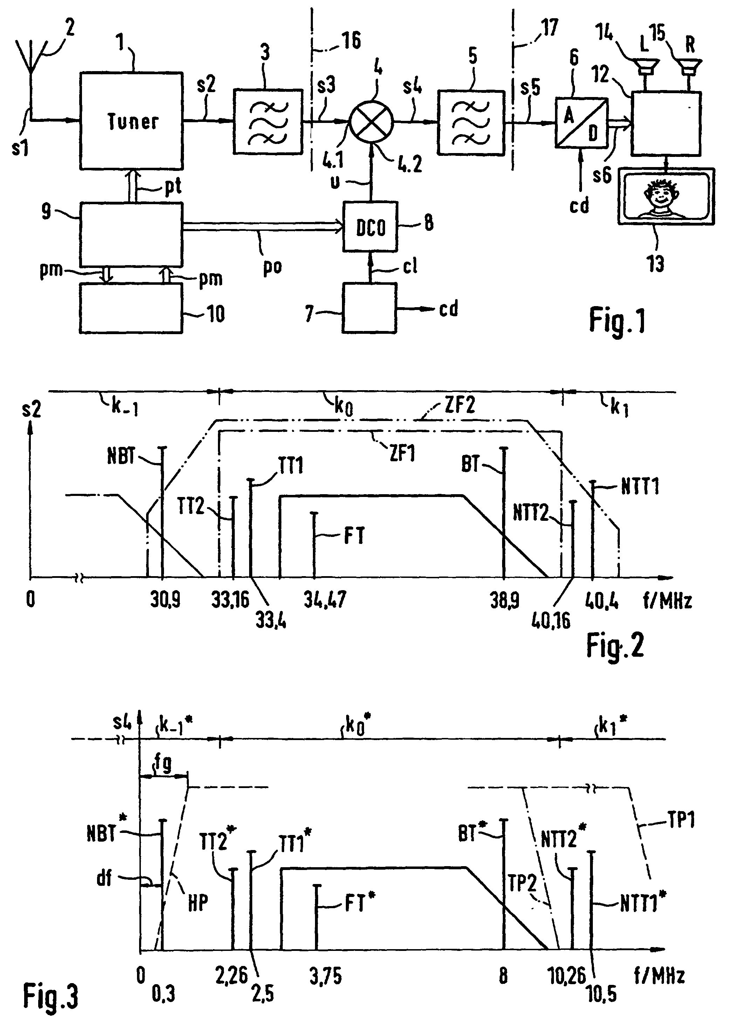

Das Blockschaltbild von Fig. 1 zeigt die Frequenzumsetzungseinrichtung nach der Erfindung in einem typischen Anwendungsfall mit vorausgehenden und nachfolgenden Schaltungseinrichtungen, die beispielsweise einem Fernsehempfänger mit digitaler Signalverarbeitung entsprechen. Ein Tuner 1 empfängt über eine Antenne 2 ein hochfrequent übertragenes Fernsehsignalgemisch s1, das im Tuner in eine Zwischenfrequenzlage umgesetzt und als Fernsehsignalgemisch s2 einem Universal-Zwischenfrequenzfilter 3 zugeführt wird. Dieses Zwischenfrequenzfilter 3 muß nicht mehr die speziellen Selektionseigenschaften üblicher Zwischenfrequenzfilter erfüllen, sondern die Erfindung läßt hier die Verwendung eines weniger selektiven Universal-Zwischenfrequenzfilters zu, das ebenfalls mittels eines OFW-Filters realisierbar ist.

Das Ausgangssignal s3 des Zwischenfrequenzfilters 3 ist einem Mischer 4 zugeführt, dem eine analoge Filtereinrichtung 5 mit Bandpaßeigenschaften folgt. Diese enthält eine in der Nähe des Frequenzursprungs liegende Hochpaßselektionsflanke HP, die bei der Frequenz des umgesetzten Nachbarbildträgers NBT* jedoch schon eine relativ hohe Dämpfung aufweist. Es ist zweckmäßig, wenn die Filtereinrichtung 5 für höhere Frequenzen auch eine Tiefpaßcharakteristik aufweist, weil dann die Reste der dortigen Nachbarkanäle abgeschwächt oder unterdrückt werden. Ebenso werden die Oberwellen unterdrückt, die im Mischer 4 durch Nichtlinearitäten entstehen, vor allen Dingen dann, wenn als Umsetzungssignal u ein Rechtecksignal mit den Werten +1 und -1 verwendet wird. In diesem Fall enthält der Mischer 4 lediglich eine analoge Invertierungsstufe für das Fernsehsignalgemisch s3 am hochfrequenten Signaleingang 4.1. Nach der Filtereinrichtung 5 sind die störende Signalkomponenten klein genug, so daß das gewünschte Fernsehsignalgemisch s5 in seine einzelnen Signalkomponenten zerlegt werden kann. Dies kann analog oder digital erfolgen. Im Ausführungsbeispiel von Fig. 1 wird das Fernsehsignalgemisch s5 in der tiefen Frequenzlage mittels eines Analog-Digitalumsetzers 6 digitalisiert und bildet einen Datenstrom s6. Der zugehörige Digitalisierungstakt cd stammt aus einem Systemtaktgenerator 7.

An den Analog-Digitalumsetzer, der beispielsweise eine Auflösung von 10 Bit hat, schließt sich eine digitale Fernsehsignalverarbeitungsschaltung 12 an, die mit einem Bildschirm 13 und einem Lautsprecherpaar 14, 15 zur Bild- und Tonwiedergabe verkoppelt ist. Die digitale Fernsehsignalverarbeitungsschaltung 12 enthält dann auch wie üblich die digitalen Filterschaltungen, die genau auf die jeweiligen Bild- und Tonkanäle abgestimmt sind, um die exakte Signaltrennung und Demodulation der einzelnen Signalkomponenten zu ermöglichen.

Durch die Erfindung verlagert sich der Selektionsaufwand vom externen OFW-Zwischenfrequenzfilter in Richtung der nachfolgenden Schaltung, die insgesamt oder mindestens in wesentlichen Teilen monolithisch integriert ist. Gegeignete IC-Eingangs-Schnittstellen 16, 17 sind in Fig. 1 angegeben. Wenn in der monolithisch integrierten Schaltung analoge und digitale Funktionseinheiten gemeinsam realisierbar sind, dann ist die Schnittstelle 16 von Vorteil. Der hochfrequente Signaleingang 4.1 des Mischers 4 bildet in diesem Fall zugleich den IC-Signaleingang. Wenn die Auflösung des Analog-Digitalumsetzers 6 groß genug ist, kann die Trennung der Bild- und Tonsignale rein digital in der Signalverarbeitungsschaltung 12 aus dem gemeinsamen Datenstrom s6 erfolgen. Eine separate Digitalisierung der zuvor getrennten Bild- und Tonsignale entsprechend den üblichen Paralleltonverfahren ist dann nicht erforderlich.

Der lokale Oszillatoreingang 4.2 des Mischers 4 ist mit dem Umsetzungssignal u aus einem lokalen Oszillator 8 gespeist. Werden für das Umsetzungssignal u im Mehrnormenbetrieb unterschiedliche Frequenzen gefordert, dann ist der lokale Oszillator 8 in der Frequenz steuerbar und in eine PLL-Schaltung eingebunden. Die zugehörigen Steuersignale po, in Fig. 1 handelt es sich um digitale Steuersignale, stammen aus einer Steuereinrichtung 9, z.B. ein Mikroprozessor, die auch Steuersignale pt für den Tuner 1 liefert. Die einzelnen Steuerinformationen werden je nach dem auszuwählenden Kanal und dem zugehörigen Fernsehsignalstandard aus einem Speicher 10 als Kanaldaten pm abgerufen. Für den lokalen Oszillator 8, der in Fig. 1 ein digital gesteuerter Oszillator (=DCO) ist, stellt der quarzgenaue Systemtakt cl die Referenzfrequenz dar, die über die PPL-Schaltung mit der Frequenz des jeweiligen Umsetzungssignals u verkoppelt ist.

In Fig. 2 ist das typische Signalspektrum am Ausgang des Tuners 1 für ein Fernsehsignalgemisch s2 nach der Norm G in der Zwischenfrequenzlage schematisch dargestellt. Der aktuelle Kanal k₀ erstreckt sich dabei etwa von 33 MHz bis 40 MHz und enthält den Bildträger BT bei 38,9 MHz, den Farbhilfsträger FT bei 34,47 MHz, den ersten Tonträger TT1 bis 33,4 MHz und den zweiten Tonträger TT2 schließlich bei 33,16 MHz. Für die Tonkanalverarbeitung ist der Nachbarbildträger NBT des unteren Nachbarkanals k₋₁ kritisch, der bei 30,9 MHz, also in der Nähe der beiden Tonträger TT1 und TT2 liegt. In Fig. 2 ist schematisch die Frequenzlage eines idealen Zwischenfrequenzfilters ZF1 eingetragen, das nur die Signalkomponnten des aktuellen Kanals k₀ erfaßt. Die Filterkurve ZF2 des Universal-Zwischenfrequenzfilter 3 ist dem gegenüber weit weniger selektiv, denn es erfaßt Teile des Nachbarbildträgers NBT vom unteren Kanal k₋₁ und vom oberen Nachbarkanal k₁ den ersten und zweiten Nachbartonträger NTT1, NTT2, wenn auch abgeschwächt. Der Einfluß dieser Nachbartonträger auf die Bildwiedergabe ist weniger kritisch als der Einfluß des Nachbarbildträgers NBT auf den aktuellen Kanal k₀. Es wird hierzu ferner auf die Europäische Norm EN 55020 von 1994 "Störfestigkeit von Rundfunkempfängern und verwandten Geräten der Unterhaltungselektronik" verwiesen, die als verbindliche Prüfbedingung vorgibt, daß der störende Nachbarbildträger NBT den eigenen Bildträger BT sogar um 3 dB überragt. Die Bandbreite des Universal-Zwischenfrequenzfilters 3 bzw. ZF2 beträgt etwa 8 MHz so daß die Signalinhalte aller Übertragungsstandards (B/G, D/K, I, M/N, L/L') durchgelassen werden. Aus dem Beispiel von Fig.2 ist ersichtlich, daß die Filterkurve ZF2 unerwünschte Nachbarkanalanteile k₁, k₋₁ nur ungenügend dämpft.

Fig. 3 zeigt das Frequenzspektrum des Fernsehsignalgemisches s4 nach der zweiten Frequenzumsetzung, die entsprechend dem Frequenzschema von Fig. 2 mit einem Umsetzungssignal u durchgeführt wird, das möglichst dicht bei 30,9 MHz liegt. Im dargestellten Beispiel beträgt die Frequenzablage df des lokalen Umsetzungssignals u vom Nachbarbildträger NBT 300 kHz. Der umgesetzte aktuelle Fernsehkanal k₀* liegt etwa zwischen 2 MHz und 10 MHz. Der störende Nachbarbildträger NBT* liegt entsprechend der 300kHz-Frequenzablage df des Umsetzungssignals u bei 300 kHz und kann mittels einer Hochpaßselektionsflanke HP geringer Ordnung, deren Grenzfrequenz fg im dargestellten Beispiel bei 1 MHz liegt, weitgehend unterdrückt werden. Die störenden Oberwellen bei 60 MHz können mittels einer Tiefpaßselektionsflanke TP1 unterhalb von 60 MHz unterdrückt werden. Optimal wäre es, wenn die Tiefpaßselektionsflanke so tief liegen würde, daß sie möglichst nur den aktuellen Kanal k₀* hindurchließe, vgl. die in Fig. 3 dargestellte ideale Tiefpaßselektionsflanke TP2. Diese steile Selektionsflanke TP2 ist indessen nicht notwendig. Entscheidend ist, daß die Tiefpaßselektionsflanke TP1 oder TP2 den aktuellen Kanal k₀* noch nicht dämpft, insbesondere wenn die Realisierung der Nyquistflanke beim Bildträger BT nachfolgenden Stufen vorbehalten bleibt.

## Patentansprüche

1. Frequenzumsetzungseinrichtung zur Umsetzung eines mit einem von mehreren Fernsehsignal- und Kanalstandards verkoppelten Zwischenfrequenz-Fernsehsignalgemisches (s2) in eine tiefe Frequenzlage mittels eines Mischers (4), der an seinem hochfrequenten Signaleingang (4.1) über ein festes, vom jeweiligen Fernsehsignal- und Kanalstandard unabhängiges Zwischenfrequenzfilter (3) mit dem Zwischenfrequenz-Fernsehsignalgemisch (s2) und an seinem lokalen Oszillatoreingang (4.2) mit einem Umsetzungssignal (u) gespeist ist, wobei die Frequenz des Umsetzungssignals (u) je nach dem zu empfangenden Fernsehsignal- und Kanalstandard einen von mehreren Werten derart annimmt dass die auf das Zwischenfrequenzsignalgemisch (s2) bezogene Umsetzungsfrequenz nach an der Frequenz des durch den jeweiligen Fernsehsignalstandard definierten Bildträgers des unteren Nachbarkanals (NBT) liegt, der nach der Frequenzumsetzung als umgesetzter Nachbarbildträger (NBT*) mittels einer Hochpass-Selektionsflanke (HP) einer Filtereinrichtung (5) unterdrückt oder zumindest bis auf einen unwesentlichen Amplitudenrest abgeschwächt ist.

2. Frequenzumsetzungseinrichtung nach Anspruch 1, **dadurch gekennzeichnet, daß** die Frequenzablage (df) des Umsetzungsgsignals (u) vom Nachbarbildträger (NBT) kleiner ist als die Hochpass-Grenzfrequenz (fg) der Filtereinrichtung (5).

3. Frequenzumsetzungseinrichtung nach Anspruch 2, **dadurch gekennzeichnet, daß** der Mischer (4) am lokalen Oszillatoreingang (4.2) mit einem quantisierten Umsetzungssignal (u) gespeist ist und die entstehenden Oberwellen nach dem Mischer (4) aus dem Fernsehsignalgemisch (s4) mittels einer Tiefpass-Selektionsflanke (TP1, TP2) der Filtereinrichtung (5) unterdrückt sind.

4. Frequenzumsetzungseinrichtung nach Anspruch 3, **dadurch gekennzeichnet, daß** das Umsetzungssignal (u) ein Rechtecksignal ist, das insbesondere die Werte +1 und -1 aufweist.

5. Frequenzumsetzungseinrichtung nach einem der Ansprüche 1 bis 4, **dadurch gekennzeichnet, daß** der lokale Oszillatoreingang (4.2) von einem digital gesteuerten Oszillator (8) gespeist ist dessen Frequenz entsprechend dem jeweiligen Fernsehsignalstandard und/oder dem jeweiligen Kanalabstand von einer Steuereinrichtung (9) über Steuersignale (po) vorgegeben ist.

6. Frequenzumsetzungseinrichtung nach einem der Ansprüche 1 bis 5, **dadurch gekennzeichnet, daß** das Fernsehsignalgemisch (s5) nach der Filtereinrichtung (5) mittels eines Analog-Digitalumsetzers (6) für die weitere Signalverarbeitung digitalisiert ist.

## Claims

1. A frequency conversion arrangement for converting an intermediate-frequency composite video signal (s2) to a low frequency by means of a mixer (4) whose radiofrequency signal input (4.1) is fed with the intermediate-frequency composite video signal (s2) via an intermediate-frequency filter (3) and whose local-oscillator-signal input (4.2) is fed with a local-oscillator signal (u), the frequency of the local-oscillator signal (u) assuming one of two or more values depending on the television-signal and channel standard to be received, such that the conversion frequency related to the intermediate-frequency composite video signal is close to the frequency of the picture carrier (NBT) of the adjacent channel below, which picture carrier is defined by the respective television standard, and which after the frequency conversion is suppressed as a converted adjacent picture carrier (NBT*), or at least attenuated to a negligible residual amplitude, by means of a high-pass selectivity skirt (HP) of a filter device (5).

2. A frequency conversion arrangement as claimed in claim 1, **characterized in that** the frequency offset (df) of the local-oscillator signal (u) from the adjacent picture carrier (NBT) is less than the high-pass cutoff frequency (fg) of the filter device (5).

3. A frequency conversion arrangement as claimed in claim 2, **characterized in that** the mixer (4) is fed at the local-oscillator-signal input (4.2) with a quantized local-oscillator signal (u), and that the harmonics produced by the mixer (4) are suppressed in the composite video signal (s4) by means of a low-pass selectivity skirt (TP1, TP2) of the filter device (5).

4. A frequency conversion arrangement as claimed in claim 3, **characterized in that** the local-oscillator signal (u) is a square-wave signal, particularly a signal having the values +1 and -1.

5. A frequency conversion arrangement as claimed in any one of claims 1 to 4, **characterized in that** the local-oscillator-signal input (4.2) is fed from a digitally controlled oscillator (8) whose frequency is determined by control signals (po) from a control unit (9) according to the respective television standard and/or the respective channel spacing.

6. A frequency converter as claimed in any one of claims 1 to 5, **characterized in that** after the filter device (5), the composite video signal (s5) is digitized for further signal processing by means of an analog-to-digital converter (6).

## Revendications

1. Dispositif de conversion de fréquence pour la conversion d'un signal de télévision composite (s2) à une fréquence intermédiaire, qui est couplé à plusieurs standards de signal de télévision et de canal, en une position de fréquence basse au moyen d'un mélangeur (4) qui est alimenté, sur son entrée à haute fréquence (4.1), avec le signal de télévision composite (s2) à une fréquence intermédiaire, par l'intermédiaire d'un filtre à fréquence intermédiaire (3), qui est indépendant de chacun des standards de signal de télévision et de canal, et, sur son entrée d'oscillateur local (4.2), avec un signal de conversion (u), dispositif dans lequel la fréquence du signal de conversion (u) prend, en fonction du standard de signal de télévision et de canal devant être reçus, une valeur parmi plusieurs de telle manière que la fréquence de conversion relative au signal de télévision composite (s2) à une fréquence intermédiaire se trouve au voisinage de la fréquence de la porteuse de l'image (NBT) du canal voisin inférieur, qui est définie par le standard de signal de télévision respectif et qui, après la conversion de fréquence, est supprimée ou, pour le moins, réduite à un résidu d'amplitude négligeable, en tant que porteuse de l'image du canal voisin convertie (NBT*), au moyen d'un flanc de sélection passe-haut (HP) d'un dispositif de filtrage (5).

2. Dispositif de conversion de fréquence selon la revendication 1, **caractérisé en ce que** la dérive de la fréquence (df) du signal de conversion (u) de la porteuse de l'image du canal voisin (NBT) est plus petite que la fréquence de coupure passe-haut (fg) du dispositif de filtrage (5).

3. Dispositif de conversion de fréquence selon la revendication 2, **caractérisé en ce que** le mélangeur (4) est alimenté, sur son entrée d'oscillateur local (4.2), avec un signal de conversion quantifié (u) et **en ce que** les harmoniques créées après le mélangeur (4) sont supprimées du signal de télévision composite (s4) au moyen d'un flanc de sélection passe-bas (TP1, TP2) du dispositif de filtrage (5).

4. Dispositif de conversion de fréquence selon la revendication 3, **caractérisé en ce que** le signal de conversion (u) est un signal rectangulaire qui présente, en particulier, les valeurs +1 et -1.

5. Dispositif de conversion de fréquence selon l'une quelconque des revendications 1 à 4, **caractérisé en ce que** l'entrée de l'oscillateur local (4.2) est alimentée par un oscillateur à commande numérique (8) dont la fréquence est prédéterminée, en correspondance avec le standard de télévision considéré et/ou avec l'écart entre les canaux respectifs, par un dispositif de commande (9) par l'intermédiaire de signaux de commande (po).

6. Dispositif de conversion de fréquence selon l'une quelconque des revendications 1 à 5, **caractérisé en ce que** le signal de télévision composite (s5) est numérisé en vue du traitement ultérieur après le dispositif de filtrage (5) au moyen d'un convertisseur analogique-numérique (6).
